(19) **Europäisches Patentamt / European Patent Office / Office européen des brevets**

(11) **EP 2 215 343 B1**

(12) **FASCICULE DE BREVET EUROPEEN**

(45) Date de publication et mention
de la délivrance du brevet:
**04.01.2017 Bulletin 2017/01**

(21) Numéro de dépôt: **08854221.2**

(22) Date de dépôt: **05.11.2008**

(51) Int Cl.:
*F02D 41/00* (2006.01)  *F02D 41/18* (2006.01)
*F02D 41/22* (2006.01)  *F02D 41/40* (2006.01)
*F02D 41/06* (2006.01)  *F02D 41/14* (2006.01)
*F02D 41/34* (2006.01)

(86) Numéro de dépôt international:
**PCT/FR2008/051992**

(87) Numéro de publication internationale:
**WO 2009/068779 (04.06.2009 Gazette 2009/23)**

(54) **PROCEDE POUR DIAGNOSTIQUER L'ETAT D'UN SYSTEME D'ALIMENTATION EN CARBURANT D'UN MOTEUR**

**VERFAHREN UND SYSTEM ZUR DIAGNOSE DES ZUSTANDES EINES KRAFTSTOFFVERSORGUNGSSYSTEMS**

**METHOD FOR DIAGNOSING THE CONDITION OF AN ENGINE FUEL SUPPLY SYSTEM**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.11.2007 FR 0708130**

(43) Date de publication de la demande:
**11.08.2010 Bulletin 2010/32**

(73) Titulaire: **Renault S.A.S.**
**92100 Boulogne-Billancourt (FR)**

(72) Inventeurs:
• **PROTIN, Nicolas**
**F-78210 Saint Cyr L'ecole (FR)**

• **LEPORCQ, Michel**
**F-91390 Morsang Sur Orge (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
**EP-A- 0 810 364      US-A1- 2002 104 508**
**US-A1- 2007 119 411**

EP 2 215 343 B1

**Description**

La présente invention se rapporte à un procédé pour diagnostiquer l'état d'un système d'alimentation en carburant d'un moteur à combustion interne à allumage commandé et à injection de carburant, du type comportant un dispositif de contrôle électronique qui fait usage d'une sonde à oxygène pour réguler en boucle fermée la valeur du rapport air-carburant admis dans les chambres de combustion du dit moteur.

La réglementation actuelle, en termes d'émission de polluants, exige "la surveillance du système d'alimentation en carburant par rapport à sa capacité à répondre aux standards d'émissions". Une défaillance de ce système qui entraînerait un dépassement des "seuils OBD" (pour "On Board Diagnostic") doit être signalé au conducteur du véhicule par l'allumage d'un voyant "OBD".

Les défaillances d'un système d'alimentation de carburant, telles que les fuites de carburant, les obstructions ou le vieillissement, entraînent une variation des caractéristiques hydrauliques au sein de celui-ci, ce qui dégrade par conséquent la qualité de la régulation de la richesse en carburant du mélange carburant/air injecté.

Ainsi, la richesse en sortie du moteur n'est plus comprise dans la fenêtre d'efficacité du catalyseur sur certains points de fonctionnement du moteur, entraînant alors une baisse d'efficacité de ce dernier, ainsi qu'une augmentation de la quantité de polluants émise en sortie du collecteur de gaz d'échappement du véhicule.

Le respect de l'exigence détaillé ci-dessus revient à trouver des moyens pour surveiller directement ou indirectement la quantité de carburant injectée.

voir par exemple US2002/0104508 A1

Dans le document FR-A-2 726 860 au nom du présent demandeur est décrit un procédé qui permet de surveiller le circuit d'alimentation en carburant par l'intermédiaire de la tension de sortie d'une sonde à oxygène (sonde binaire lambda).

Dès que cette tension reste à une valeur basse prédéterminée pendant un certain temps, alors un état de défaillance est validé.

Cette technique permet de détecter des défauts dus à une diminution générale de la richesse des gaz d'échappement en amont du catalyseur, mais non ceux résultant d'une augmentation de cette richesse.

De plus, pour détecter une défaillance, il est nécessaire que le signal délivré par la sonde reste "calé" sur ladite valeur basse pendant un certain temps, de sorte que seules les défaillances très sévères entraînant un large dépassement des "seuils OBD" sont détectées.

Dans ces conditions, un tel procédé n'est pas adapté pour détecter les défaillances du circuit d'alimentation en carburant, si on tient compte des normes actuelles.

La présente invention vise à résoudre ces problèmes, en proposant un procédé pour diagnostiquer l'état d'un système d'alimentation en carburant d'un moteur à combustion interne à allumage commandé et à injection de carburant qui permet de détecter des défaillances dues aussi bien à une augmentation qu'à une baisse de la richesse des gaz d'échappement, ceci de manière rapide, et sans devoir recourir à des moyens spécifiques supplémentaires.

Ainsi, l'invention se rapporte à un procédé pour diagnostiquer l'état d'un système d'alimentation en carburant d'un moteur à combustion interne à allumage commandé et à injection de carburant, du type comportant un dispositif de contrôle électronique qui fait usage d'une sonde à oxygène pour réguler en boucle fermée la valeur du rapport air-carburant admis dans les chambres de combustion dudit moteur, et selon lequel on analyse le signal délivré par ladite sonde à oxygène,

caractérisé par le fait qu'il consiste à :

a) déduire dudit signal, l'évolution du facteur correctif de temps d'injection ALPHACL_MOYEN qui permet de réguler la richesse des gaz d'échappement en sortie du moteur, ALPHACL_MOYEN étant donné par la relation :

$$\text{Temps d'injection efficace} = B + \text{ALPHACL\_MOYEN} * \text{GAIN} * A * \text{Mair},$$

dans laquelle : B est une valeur OFFSET qui corrige le temps d'injection efficace en fonction du vieillissement du système d'alimentation en carburant;
GAIN est un coefficient permettant de tenir compte de la dérive des caractéristiques hydrauliques du système d'alimentation de carburant, due au vieillissement ;
A est un facteur prenant en compte différents phénomènes liés notamment à la purge canister, au mouillage des parois ;
Mair est la masse d'air mesurée ou estimée admise dans un cylindre du moteur ;
b) comparer ALPHACL_MOYEN à des valeurs seuils prédéterminées minimale SEUIL_MIN et maximale SEUIL_MAX ;

c) diagnostiquer un état défaillant quand ALPHACL_MOYEN est en dehors de la fenêtre comprise entre SEUIL_MIN et SEUIL_MAX.

Selon d'autres caractéristiques avantageuses et non limitatives de ce procédé :

- à l'étape c), on comptabilise le nombre de périodes de temps pendant lesquelles ALPHACL_MOYEN est en dehors de la fenêtre comprise entre SEUIL_MIN et SEUIL_MAX et on diagnostique ledit état défaillant quand le nombre de périodes est égal à un nombre prédéterminé ;
- on affecte audit nombre prédéterminé la variable FENETRE, on retranche de cette variable la valeur 1 dès qu'une nouvelle période de temps est comptabilisée, et qu'on diagnostique ledit état défaillant quand la variable FENETRE est inférieure ou égale à zéro ;
- lesdites étapes a), b) et c) sont mises en oeuvre seulement si au moins une des conditions préalables suivantes sont vérifiées :

    • la régulation de ladite richesse s'opère en boucle fermée ;
    • l'injection de carburant fonctionne en mode séquentiel ;
    • le niveau de charge du moteur et son régime sont situés dans une zone prédéfinie ;
    • les capteurs permettant de mesurer les variables nécessaires au diagnostic ne sont pas défaillants.

- lesdites étapes a), b) et c) sont mises en oeuvre seulement si toutes lesdites conditions préalables sont vérifiées ;
- lesdites valeurs de seuil dépendent des conditions de fonctionnement du moteur ;
- lesdites valeurs de seuil varient selon que le moteur fonctionne à chaud ou à froid.

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est une vue schématique d'un moteur à combustion interne équipé d'un dispositif de mise en oeuvre du procédé selon l'invention ;
- les figures 2 et 3 sont des schémas blocs précisant les différentes étapes du procédé de l'invention ;
- les figures 4A à 4E sont des courbes donnant, en fonction du temps, l'évolution des principaux paramètres ALPHACL_MOYEN, CTR_DEFAUT, CTR_NODEFAUT, FENETRE et DEFAUT_PRESENT utilisés dans le cadre du présent procédé, tel qu'illustré aux figures 2 et 3.

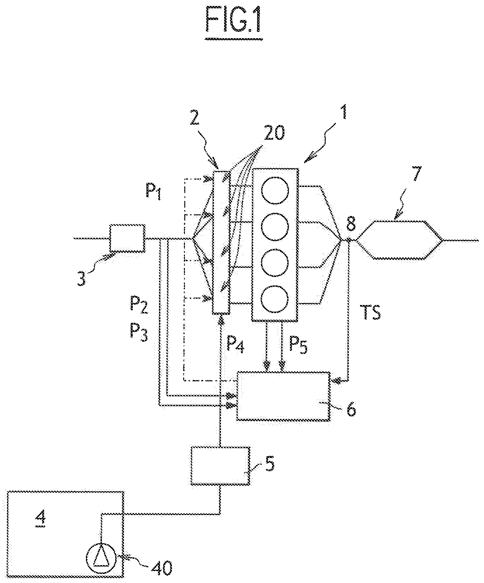

On a représenté schématiquement à la figure 1 annexée un moteur 1 à combustion interne multicylindre à allumage commandé, qui est équipé d'un rail 2 d'alimentation en carburant à injection multipoints et à commande électrique. Ainsi, chaque cylindre du moteur est alimenté par un électro-injecteur 20 qui lui est dédié. Un système de contrôle électronique 6 commande le temps d'ouverture de chaque injecteur de manière à ajuster le mélange air/carburant admis dans le moteur à une valeur de richesse donnée (de préférence proche du rapport stoechiométrique).

Le carburant, stocké dans un réservoir 4, est amené jusqu'aux injecteurs 20, via une pompe 40 et un filtre 5.

Parallèlement, une valve papillon 3 délivre de l'air frais.

En aval du moteur 1, sur la ligne d'échappement, est prévu un catalyseur 8. Juste en amont de celui-ci est prévu une sonde à oxygène 8.

Le système 6 comprend notamment, de manière connue en soi, une unité centrale, des mémoires et différentes interfaces d'entrée et de sortie. Ce système reçoit des signaux d'entrée notamment relatifs au fonctionnement du moteur, effectue des opérations et génère des signaux de sortie, notamment à destination des injecteurs.

Parmi les signaux d'entrée que le système 6 peut être amené à traiter figurent les informations suivantes : la "charge" du moteur, le "régime" du moteur, le signal de sortie de la sonde à oxygène, la "non défaillance des capteurs chargés de gérer le diagnostic, etc.

Pour ce faire, le moteur et/ou son environnement immédiat sont pourvus de :

- moyens de commande P1 des injecteurs ;
- moyens de mesure ou d'estimation de la température d'air dans le répartiteur d'air à l'admission P2 ;
- moyens de mesure ou d'estimation de la pression dans le répartiteur d'air à l'admission P3 ;
- moyens de mesure ou d'estimation de la température d'eau P4 ;
- moyens de mesure ou d'estimation du régime P5 ;
- moyens de mesure de la tension de sortie PS de la sonde 8.

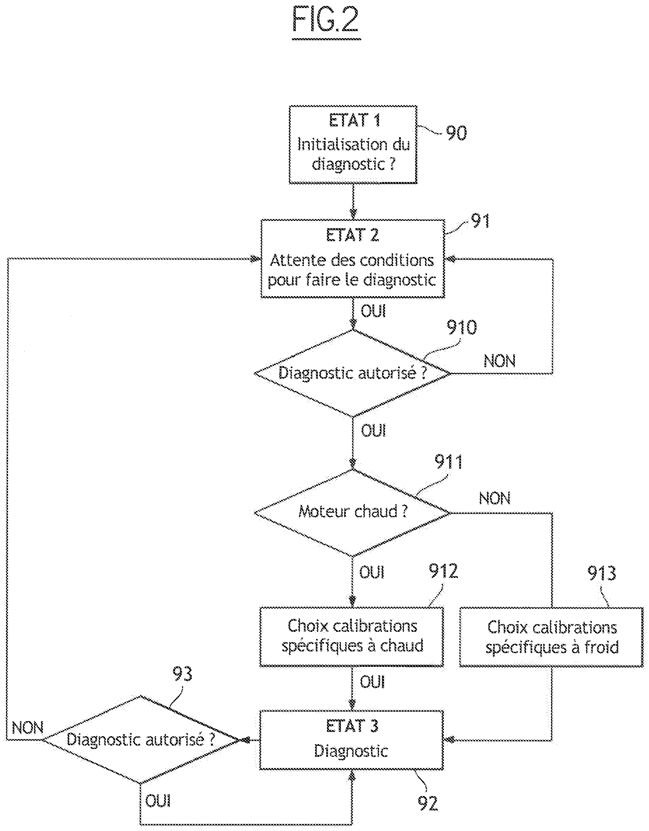

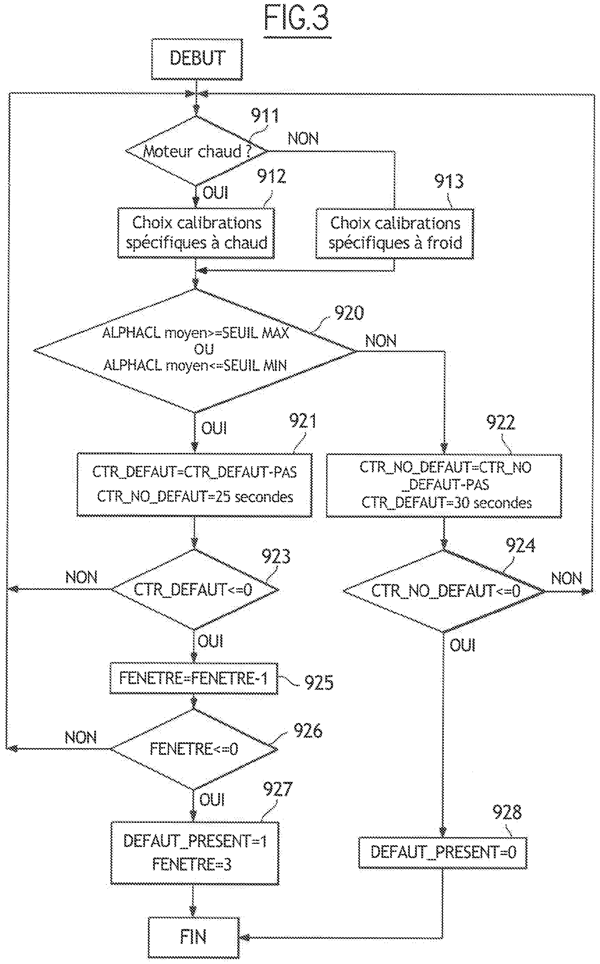

En référence à la figure 2, puis à la figure 3, on décrira ci-après un mode de mise en oeuvre possible du procédé selon l'invention.

Cette mise en oeuvre passe par trois "états". L'"ETAT 1" (bloc 90) correspond à l'initialisation de toutes les variables utilisées pour le diagnostic. L'"ETAT 2" (bloc 91) est un état d'attente des conditions adéquates pour réaliser le diagnostic. Cela correspond aux deux premiers blocs de la figure 2.

Enfin, l'"ETAT 3" (bloc 92) correspond au diagnostic proprement dit du circuit d'alimentation en carburant.

Cependant, pour passer de l'"ETAT 2" à l'"ETAT 3", on vérifie que les conditions d'activation du diagnostic sont présentes (bloc 910).

En d'autres termes, on vérifie que :

- la régulation de richesse est en boucle fermée ;
- l'injection fonctionne en mode séquentiel ;
- le niveau de charge du moteur et son régime sont situés dans une zone prédéfinie ;
- les capteurs permettant de déterminer les entrées consommées par le diagnostic ne sont pas défaillants.

L'"ETAT3" est conservé tant que les conditions d'activation du diagnostic sont présentes.

Avant de passer à l'"ETAT 3", on vérifie si le moteur est chaud. S'il l'est (bloc 912), on paramètre des calibrations spécifiques à chaud, tandis que s'il est froid (bloc 913), on paramètre d'autres calibrations spécifiques à froid. Ces calibrations sont notamment les seuils et temps de détection.

Lorsque ALPHACL_MOYEN est compris dans la fenêtre délimitée par deux seuils minimum SEUIL_MIN et maximum SEUIL_MAX (bloc 920), alors le compteur de temps CTR_NO_DEFAULT déterminant le temps passé sans défaut entre les deux seuils, est enclenché, tandis que le compteur de temps CTR_DEFAULT déterminant le temps passé avec défaut entre les deux seuils est réinitialisé (bloc 922).

Dès que CTR_NO_DEFAULT atteint une valeur nulle (bloc 924), une information DEFAUT_PRESENT devient égale à zéro (bloc 928) et avertit qu'aucune défaillance n'est détectée sur le système d'alimentation en carburant.

Lorsque ALPHACL_MOYEN sort de la zone délimitée par les deux seuils précités (bloc 920), alors le compteur de temps CTR_DEFAULT déterminant le temps passé hors de deux seuils est déclenché, tandis que le compteur de temps CTR_NO_DEFAULT déterminant le temps passé sans défaut entre les deux seuils est réinitialisé (bloc 921). Dès que CTR_DEFAULT atteint une valeur nulle (bloc 923), une variable FENETRE, à laquelle on a affecté à l'origine une valeur prédéterminée, par exemple la valeur 3, est décrémentée d'une unité (bloc 925).

Tant que la variable FENETRE est supérieure à zéro, le diagnostic est réitéré.

Quand FENETRE est égale à zéro (bloc 926), alors DEFAUT_PRESENT devient égal à un (bloc 927), et avertit qu'une défaillance est détectée sur le système d'alimentation en carburant. La variable FENETRE est alors réinitialisée.

En fonctionnement nominal, c'est à dire lorsqu'il n'y a pas de défaillance sur le circuit d'alimentation en carburant, la richesse des gaz d'échappement en sortie de moteur et en amont du catalyseur reste en permanence très proche du rapport stoechiométrique, et par conséquent, la correction du temps d'injection est faible. ALPHACL_MOYEN reste très proche de sa valeur nominale et compris entre les deux valeurs de seuil. On ne détecte donc pas de défaut.

En fonctionnement dit défaillant, c'est à dire lorsqu'il y a une défaillance sur le circuit d'alimentation, du type fuite, obstruction, casse mécanique de la pompe à carburant, etc., la richesse des gaz d'échappement est éloignée du rapport stoechiométrique lorsqu'aucune correction du temps d'injection n'est appliquée.

Une fois la boucle fermée de régulation de richesse activée, l'effet de la défaillance sur la quantité injectée est compensée par l'intermédiaire de ALPHACL_MOYEN qui augmente ou qui diminue le temps d'injection pour que la richesse en amont du catalyseur coïncide avec la stoechiométrie. Ainsi, ALPHACL_MOYEN sort de la fenêtre délimitée par les deux seuils. Une défaillance est alors détectée au bout de quelques dizaines de secondes.

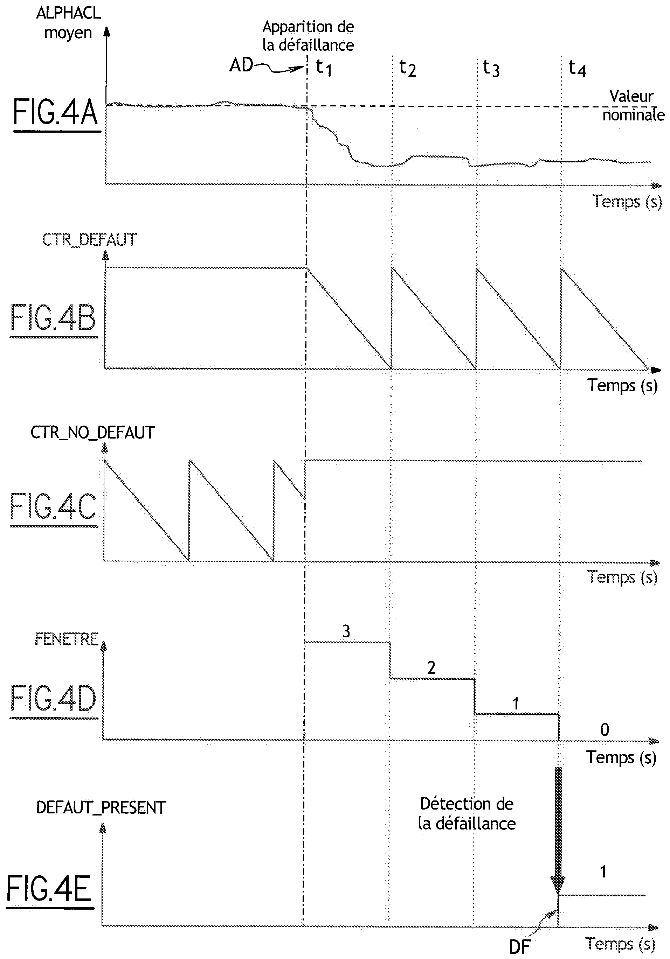

Les courbes de la figure 4 montrent l'évolution, en fonction du temps, de certains des paramètres donnés ci-dessus.

La ligne verticale AD correspond au temps d'apparition de la défaillance, tandis que la flèche DF correspond au temps de détection de cette défaillance.

Tant que la valeur ALPHACL_MOYEN est comprise dans la fenêtre délimitée par deux seuils minimum SEUIL_MIN et maximum SEUIL_MAX, c'est à dire est proche de sa valeur nominale (partie de la courbe de la figure 4A située entre t=0 et t1, la variable CTR_DEFAUT est réinitialisée (partie correspondante de la figure 4B). Parallèlement, la variable CTR_NODEFAUT (partie correspondante de la figure 4C) qui est un compteur de temps, est enclenché et réinitialisé à chaque contrôle.

Au temps t1, la valeur ALPHACL_MOYEN n'est plus comprise dans la fenêtre délimitée par deux seuils minimum SEUIL_MIN et maximum SEUIL_MAX, ce qui correspond à l'apparition d'une défaillance AD.

Les variables CTR_DEFAUT et CTR_NODEFAUT sont alors respectivement décrémentée et réinitialisée, tant que la valeur ALPHACL_MOYEN est en dehors de la fenêtre, c'est à dire au terme des temps t2, t3 et t4 (parties des courbes des figures 4B et 4C situées à droite du temps t1).

Dès l'apparition de la défaillance AD, on affecte à la variable FENETRE la valeur 3 et on décrémente cette valeur d'une unité au terme de chacun des temps t2, t3 et t4 (figure 4D).

Enfin, dès que FENETRE atteint la valeur zéro (c'est à dire au temps t4), alors la variable DEFAUT_PRESENT devient égale à un et la défaillance DF est détectée (figure 4E).

**Revendications**

1. Procédé pour diagnostiquer l'état d'un système d'alimentation en carburant d'un moteur (1) à combustion interne à allumage commandé et à injection de carburant, du type comportant un dispositif de contrôle électronique (1) qui fait usage d'une sonde à oxygène (8) pour réguler en boucle fermée la valeur du rapport air-carburant admis dans les chambres de combustion dudit moteur (1), et selon lequel on analyse le signal délivré par ladite sonde à oxygène (8),
   **caractérisé par le fait qu'**il consiste à :

   a) déduire dudit signal, l'évolution du facteur correctif de temps d'injection ALPHACL_MOYEN qui permet de réguler la richesse des gaz d'échappement en sortie du moteur (1), ALPHACL_MOYEN étant donné par la relation :

$$\text{Temps d'injection efficace} = B + \text{ALPHACL\_MOYEN*GAIN*A*Mair,}$$

   dans laquelle :

   B est une valeur offset ;
   GAIN est un coefficient permettant de tenir compte de la dérive des caractéristiques hydrauliques du système d'alimentation de carburant ;
   A est un facteur prenant en compte différents phénomènes liés notamment à la purge canister, au mouillage des parois ;
   Mair est la masse d'air mesurée ou estimée admise dans un cylindre du moteur (1) ;

   b) comparer ALPHACL_MOYEN à des valeurs seuils prédéterminées minimale SEUIL_MIN et maximale SEUIL_MAX ;
   c) diagnostiquer un état défaillant quand ALPHACL_MOYEN est en dehors de la fenêtre comprise entre SEUIL_MIN et SEUIL_MAX.

2. Procédé selon la revendication 1, **caractérisé par le fait qu'**à l'étape c), on comptabilise le nombre de périodes de temps pendant lesquelles ALPHACL_MOYEN est en dehors de la fenêtre comprise entre SEUIL_MIN et SEUIL_MAX et on diagnostique ledit état défaillant quand le nombre de périodes est égal à un nombre prédéterminé.

3. Procédé selon la revendication 2, **caractérisé par le fait qu'**on affecte audit nombre prédéterminé la variable FENETRE, qu'on retranche de cette variable la valeur 1 dès qu'une nouvelle période de temps est comptabilisée, et qu'on diagnostique ledit état défaillant quand la variable FENETRE est inférieure ou égale à zéro.

4. Procédé selon l'une des revendications précédentes, **caractérisé par le fait que** lesdites étapes a), b) et c) sont mises en oeuvre seulement si au moins une des conditions préalables suivantes sont vérifiées :

   - la régulation de ladite richesse s'opère en boucle fermée ;
   - l'injection de carburant fonctionne en mode séquentiel ;
   - le niveau de charge du moteur (1) et son régime sont situés dans une zone prédéfinie ;
   - les capteurs permettant de mesurer les variables nécessaires au diagnostic ne sont pas défaillants.

5. Procédé selon la revendication précédente, **caractérisé par le fait que** lesdites étapes a), b) et c) sont mises en oeuvre seulement si toutes lesdites conditions préalables sont vérifiées.

6. Procédé selon l'une des revendications précédentes, **caractérisé par le fait que** lesdites valeurs de seuil dépendent des conditions de fonctionnement du moteur (1).

**7.** Procédé selon la revendication précédente, **caractérisé par le fait que** lesdites valeurs de seuil varient selon que le moteur (1) fonctionne à chaud ou à froid.

**Patentansprüche**

**1.** Verfahren zur Diagnose des Zustands eines Kraftstoffversorgungssystems einer Brennkraftmaschine (1) mit gesteuerter Zündung und mit Kraftstoffeinspritzung, des Typs, der eine elektronische Steuervorrichtung (1) aufweist, welche eine Sauerstoffsonde (8) verwendet, um im geschlossenen Regelkreis den Wert des Luft-Kraftstoff-Verhältnisses zu regeln, das in die Brennkammern der Kraftmaschine (1) eingelassen wird, und gemäß dem das von der Sauerstoffsonde (8) gelieferte Signal analysiert wird,
**dadurch gekennzeichnet, dass** es in Folgendem besteht:

a) Ableiten der Veränderung des Korrekturfaktors der Einspritzdauer ALPHACL MOYEN aus dem Signal, welcher es gestattet, die Anreicherung der Abgase am Ausgang der Kraftmaschine (1) zu regeln, wobei ALPHACL_MOYEN durch folgende Beziehung gegeben ist:

```
Effektive Einspritzdauer =
B + ALPHACL_MOYEN*GAIN*A*Mair,
```

wobei:

B ein Versatzwert ist;
GAIN ein Koeffizient ist, der es gestattet, die Drift der hydraulischen Kenngrößen des Kraftstoffversorgungssystems zu berücksichtigen;
A ein Faktor ist, der verschiedene Erscheinungen berücksichtigt, die insbesondere mit der Tankentlüftung und mit der Benetzung der Wände zusammenhängen;
Mair die gemessene oder geschätzte Luftmasse ist, die in einen Zylinder der Kraftmaschine (1) eingelassen wurde;

b) Vergleichen von ALPHACL_MOYEN mit einem vorbestimmten minimalen und einem vorbestimmten maximalen Schwellenwert SEUIL_MIN bzw. SEUIL_MAX;
c) Diagnostizieren eines Ausfallzustands, wenn ALPHACL_MOYEN außerhalb des zwischen SEUIL_MIN und SEUIL_MAX liegenden Fensters liegt.

**2.** Verfahren nach Anspruch 1, **dadurch gekennzeichnet, dass** in Schritt c) die Anzahl der Zeitabschnitte gezählt wird, in denen ALPHACL_MOYEN außerhalb des zwischen SEUIL_MIN und SEUIL_MAX liegenden Fensters liegt, und der Ausfallzustand diagnostiziert wird, wenn die Anzahl der Zeitabschnitte gleich einer vorbestimmten Anzahl ist.

**3.** Verfahren nach Anspruch 2, **dadurch gekennzeichnet, dass** der vorbestimmten Anzahl die Variable FENETRE (FENSTER) zugeordnet wird, dass von dieser Variablen der Wert 1 subtrahiert wird, sobald ein neuer Zeitabschnitt gezählt wird, und dass der Ausfallzustand diagnostiziert wird, wenn die Variable FENETRE kleiner oder gleich null ist.

**4.** Verfahren nach einem der vorhergehenden Ansprüche, **dadurch gekennzeichnet, dass** die Schritte a), b) und c) nur ausgeführt werden, falls wenigstens eine der folgenden Voraussetzungen erfüllt ist:

- die Regelung der Anreicherung erfolgt im geschlossenen Regelkreis;
- die Kraftstoffeinspritzung erfolgt im sequentiellen Betrieb;
- das Lastniveau der Kraftmaschine (1) und ihre Drehzahl liegen in einem vordefinierten Bereich;
- die Sensoren, die es ermöglichen, die für die Diagnose erforderlichen Variablen zu messen, sind nicht ausgefallen.

**5.** Verfahren nach dem vorhergehenden Anspruch, **dadurch gekennzeichnet, dass** die Schritte a), b) und c) nur ausgeführt werden, falls alle genannten Voraussetzungen erfüllt sind.

**6.** Verfahren nach dem vorhergehenden Anspruch, **dadurch gekennzeichnet, dass** die Schwellenwerte von dem Betriebsbedingungen der Kraftmaschine (1) abhängen.

7. Verfahren nach dem vorhergehenden Anspruch, **dadurch gekennzeichnet, dass** die Schwellenwerte in Abhängigkeit davon, ob die Kraftmaschine (1) im warmen oder im kalten Zustand betrieben wird, variieren.

**Claims**

1. Method for diagnosing the state of a system for supplying fuel to a fuel-injected, controlledignition internal combustion engine (1), of the type comprising an electronic control device (1) which makes use of an oxygen probe (8) for closed-loop regulation of the value of the air-fuel ratio admitted into the combustion chambers of said engine (1), and according to which the signal delivered by said oxygen probe (8) is analyzed, **characterized in that** it consists in:

    a) deducing from said signal, the change in the injection time correction factor ALPHACL_MEAN that makes it possible to regulate the richness of the exhaust gases leaving the engine (1), ALPHACL_MEAN being given by the relation:

    ```
    effective injection time =
    B + ALPHACL_MEAN*GAIN*A*Mair,
    ```

    in which:

    B is an offset value;
    GAIN is a coefficient making it possible to take account of the drift in the hydraulic characteristics of the fuel supply system;
    A is a factor that takes into account various phenomena notably linked to canister draining, the wetting of the walls;
    Mair is the measured or estimated mass of air admitted into a cylinder of the engine (1);

    b) comparing ALPHACL-MEAN with predetermined minimum and maximum threshold values THRESHOLD-_MIN and THRESHOLD_MAX;
    c) diagnosing a defective state when ALPHACL_MEAN is outside the window contained between THRESHOLD_MIN and THRESHOLD_MAX.

2. Method according to Claim 1, **characterized in that**, in the step c), the number of time periods during which ALPHACL_MEAN is outside the window contained between THRESHOLD_MIN and THRESHOLD_MAX is counted and said defective state is diagnosed when the number of periods is equal to a predetermined number.

3. Method according to Claim 2, **characterized in that** the WINDOW variable is assigned to said predetermined number, that the value 1 is subtracted from this variable as soon as a new time period is counted, and that said defective state is diagnosed when the WINDOW variable is less than or equal to zero.

4. Method according to one of the preceding claims, **characterized in that** said steps a), b) and c) are implemented only if at least one of the following preconditions is satisfied:

    - said richness is being regulated in closed loop mode;
    - fuel injection is operating in sequential mode;
    - the load level of the engine (1) and its speed are situated within a predefined region;
    - the sensors for measuring the variables necessary to the diagnosis are not defective.

5. Method according to the preceding claim, **characterized in that** said steps a), b) and c) are implemented only if all said preconditions are satisfied.

6. Method according to one of the preceding claims, **characterized in that** said threshold values depend on the operating conditions of the engine (1).

7. Method according to the preceding claim, **characterized in that** said threshold values vary depending on whether the engine (1) is operating hot or cold.

# FIG.1

## FIG.2

ETAT 1
Initialisation du
diagnostic ?　　90

ETAT 2　　91
Attente des conditions
pour faire le diagnostic

OUI

910
Diagnostic autorisé ?　　NON

OUI

911
Moteur chaud ?　　NON

OUI

912
Choix calibrations
spécifiques à chaud

913
Choix calibrations
spécifiques à froid

OUI

93
NON　　Diagnostic autorisé ?

OUI

ETAT 3
Diagnostic
92

## FIG.3

```
┌──────────┐
│  DEBUT   │
└──────────┘
```

911 — Moteur chaud ?  → NON

OUI ↓

912 — Choix calibrations spécifiques à chaud

913 — Choix calibrations spécifiques à froid

920 — ALPHACL moyen>=SEUIL MAX OU ALPHACL moyen<=SEUIL MIN → NON

OUI ↓

921 — CTR_DEFAUT=CTR_DEFAUT-PAS
CTR_NO_DEFAUT=25 secondes

922 — CTR_NO_DEFAUT=CTR_NO_DEFAUT-PAS
CTR_DEFAUT=30 secondes

923 — CTR_DEFAUT<=0 → NON

OUI ↓

924 — CTR_NO_DEFAUT<=0 → NON

OUI ↓

925 — FENETRE=FENETRE-1

926 — FENETRE<=0 → NON

OUI ↓

927 — DEFAUT_PRESENT=1
FENETRE=3

928 — DEFAUT_PRESENT=0

```
┌──────────┐
│   FIN    │
└──────────┘
```

FIG.4A

ALPHACL moyen

Apparition de la défaillance

AD → t₁   t₂   t₃   t₄

Valeur nominale

Temps (s)

FIG.4B

CTR_DEFAUT

Temps (s)

FIG.4C

CTR_NO_DEFAUT

Temps (s)

FIG.4D

FENETRE

3

2

1

0

Temps (s)

FIG.4E

DEFAUT_PRESENT

Détection de la défaillance

1

DF

Temps (s)

**EP 2 215 343 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020104508 A1

- FR 2726860 A

**12**